# EUROPÄISCHE PATENTSCHRIFT

(11) **EP 4 108 427 B1**
(45) Veröffentlichungstag und Bekanntmachung des Hinweises auf die Patenterteilung: **26.03.2025**
(21) Anmeldenummer: 22179920.8
(22) Anmeldetag: 20.06.2022
(51) Int. Cl.: B29C 65/08, B23K 20/10, B23K 20/22, B26D 5/00, B26D 7/08, B23K 103/00

(54) **VERFAHREN ZUR STEUERUNG EINES BEARBEITUNGSPROZESSES**
METHOD FOR CONTROLLING A PROCESSING PROCESS
PROCÉDÉ DE COMMANDE D'UN PROCESSUS DE TRAITEMENT

(30) Priorität: 25.06.2021 DE 102021116526
(43) Veröffentlichungstag der Anmeldung: 28.12.2022
(73) Patentinhaber: MS Ultraschall Technologie GmbH, 78549 Spaichingen (DE)
(72) Erfinder: GEHRING, Tobias, 72469 Meßstetten-Oberdigisheim (DE); GROß, Markus, 72469 Meßstetten (DE)
(74) Vertreter: Qip Patentanwälte Dr. Kuehn & Partner mbB

(56) Entgegenhaltungen:
- EP-A1- 1 997 580
- WO-A1-2008/031823
- DE-A1- 102018 208 032

## Beschreibung

Die vorliegende Erfindung betrifft ein Verfahren zur Steuerung eines Bearbeitungsprozesses, bei dem mit einer gegen ein Werkstück anstellbaren Sonotrode eine Ultraschallbearbeitung erfolgt.

Bei derartigen Bearbeitungsprozessen wird mit einer von einem Generator angesteuerten Sonotrode Ultraschall erzeugt, um hierdurch Werkstücke aus Kunststoff miteinander zu verschweißen, zu trennen, zu versiegeln, zu prägen oder dergleichen. Bei den entsprechenden Bearbeitungsprozessen wird die Sonotrode gegen das Werkstück oder gegen die Werkstücke angestellt und von einem Generator angesteuert, um Ultraschall zu erzeugen. Der erzeugte Ultraschall bewirkt ein An- bzw. Aufschmelzen des Materials der Werkstücke, so dass diese verschweißt, getrennt, geprägt, gesiegelt oder geschnitten werden können.

Für eine ordnungsgemäße Bearbeitung ist es wichtig, dass der Bearbeitungsprozess nicht zu früh oder zu spät beendet wird. Wird beispielsweise bei einem Schweißprozess die Ultraschallbearbeitung zu früh oder zu spät abgeschaltet, kann es zu Beschädigungen der Werkstücke kommen oder die Qualität der Schweißverbindung kann unzureichend sein. Bei bekannten Verfahren können deshalb für die Beendigung des Bearbeitungsprozesses oder für den Übergang in einen nachfolgenden Schritt des Bearbeitungsprozesses verschiedene Kriterien miteinander verknüpft werden. So kann beispielsweise ein Schweißprozess nach Ablauf einer festgelegten Zeit, Erreichen einer festgelegten Leistung, Zuführung einer vorbestimmten Energie oder nach Durchlaufen eines bestimmten Schweißweges beendet werden, wobei diese Kriterien auch miteinander logisch verknüpft werden können. Problematisch ist hierbei jedoch, dass bestimmte Werkstücke Fertigungstoleranzen unterliegen, so dass die vorgegebenen Kriterien je nach Werkstück zu Bearbeitungsergebnissen führen können, die nicht zufriedenstellend sind.

Ein Verfahren zur Steuerung eines Bearbeitungsprozesses nach dem Oberbegriff des Anspruchs 1 ist aus der DE 10 2018 208 032 A1 bekannt. In der WO 2008/031823 A1 ist ein Verfahren zur Qualitätsüberwachung beim Ultraschallschweißen offenbart. In der EP 1 997 580 A1 sind ein Verfahren und eine Vorrichtung zum Verschweißen einer Sammelschiene mit Kabeln durch Vibrationen beschrieben.

Es ist die Aufgabe der vorliegenden Erfindung, ein Verfahren zur Steuerung eines Bearbeitungsprozesses nach dem Oberbegriff des Anspruchs 1 zu schaffen, das bei einer Ultraschallbearbeitung mit Hilfe einer gegen ein Werkstück anstellbaren Sonotrode zu verbesserten Bearbeitungsergebnissen führt, insbesondere wenn die Werkstücke Fertigungstoleranzen unterliegen.

Die Lösung dieser Aufgabe erfolgt durch die Merkmale des Anspruchs 1.

Das erfindungsgemäße Verfahren zur Steuerung eines Bearbeitungsprozesses, bei dem mit einer gegen ein Werkstück anstellbaren Sonotrode eine Ultraschallbearbeitung erfolgt, umfasst die folgenden Schritte:
- Festlegen einer ersten Referenzsteigung und einer zweiten Referenzsteigung für den Verlauf eines Prozessparameters über der Zeit,
- Aufzeichnen des Verlaufs des Prozessparameters während der Ultraschallbearbeitung,
- wiederholtes Ermitteln einer ersten Steigung und einer zweiten Steigung des Verlaufs während des Bearbeitungsprozesses, wobei die beiden Steigungen um einen vorbestimmten zeitlichen Versatz (t) zeitlich voneinander beabstandet ermittelt werden,
- Vergleichen der ersten Steigung mit der ersten Referenzsteigung und Vergleichen der zweiten Steigung mit der zweiten Referenzsteigung während des Bearbeitungsprozesses, jeweils unter Anwendung eines vorgegebenen Vergleichskriteriums,
- Übergang in einen nachfolgenden Schritt des Bearbeitungsprozesses, insbesondere Beenden der Ultraschallbearbeitung, wenn bei einem Vergleich und insbesondere bei beiden Vergleichen gleichzeitig das vorgegebene Vergleichskriterium erfüllt ist.

Bei dem erfindungsgemäßen Verfahren wird während der Ultraschallbearbeitung der Verlauf eines Prozessparameters aufgezeichnet. Hierbei kann es sich beispielsweise um die Leistung der Sonotrode / Zeit, die Amplitude der Sonotrode / Zeit, die der Sonotrode zugeführte Energie / Zeit, die Temperatur der Sonotrode / Zeit oder die Anstellkraft der Sonotrode / Zeit handeln. Unter der Leistung der Sonotrode / Zeit wird hierbei die der Sonotrode von einem Generator zugeführte Leistung verstanden. Unter der Anstellkraft der Sonotrode / Zeit wird diejenige Kraft verstanden, mit der die Sonotrode von einem Stellglied gegen das Werkstück oder die Werkstücke angestellt wird. Erfindungsgemäß wird der Verlauf des Prozessparameters während der Ultraschallbearbeitung aufgezeichnet, d.h. gespeichert, und insbesondere auch auf einem Display, insbesondere in Echtzeit, wiedergegeben. Hierbei kann es vorteilhaft sein, wenn die Prozessparameter während, vor oder nach der Aufzeichnung aufbereitet werden, beispielsweise geglättet und/oder gefiltert werden.

Weiterhin wird während des Bearbeitungsprozesses, d.h. während der Aufzeichnung, wiederholt sowohl eine erste Steigung wie auch eine zweite Steigung des Verlaufs ermittelt, wobei die beiden Steigungen um einen vorbestimmten zeitlichen Versatz voneinander beabstandet ermittelt werden. Um automatisiert ermitteln zu können, wann der Verlauf eine Stelle erreicht hat, an der der Bearbeitungsprozess in einen nachfolgenden Schritt übergehen soll, beispielsweise beendet werden soll, werden erfindungsgemäß zuvor eine erste Referenzsteigung und eine zweite Referenzsteigung für den Verlauf des Prozessparameters festgelegt. Hierdurch kann (wiederholt bzw. kontinuierlich) die ermittelte erste Steigung mit der ersten Referenzsteigung verglichen werden und die ermittelte zweite Steigung mit der vorher festgelegten zweiten Referenzsteigung verglichen werden, während die Bearbeitung erfolgt. Diese Vergleiche werden erfindungsgemäß jeweils unter Anwendung eines vorgegebenen Vergleichskriteriums durchgeführt, so dass in einen nachfolgenden Schritt des Bearbeitungsprozesses nur dann übergegangen werden kann, wenn bei beiden Vergleichen gleichzeitig das vorgegebene Vergleichskriterium erfüllt ist.

Mit dem erfindungsgemäßen Verfahren kann ein Beenden der Ultraschallbearbeitung individuell an das jeweilige Bauteil angepasst werden, das Fertigungstoleranzen unterliegen kann. Ermöglicht wird dies dadurch, dass nicht oder nicht nur ein starres, vom tatsächlichen Bearbeitungsvorgang unabhängiges Abschaltkriterium (wie z.B. Zeit, Weg, Kraft oder Energie der Sonotrode bzw. eines Werkzeugs) vorgegeben wird. Vielmehr wird während der Bearbeitung des Werkstücks der Verlauf des Prozessparameters überprüft und es wird dann in den nachfolgenden Schritt des Bearbeitungsprozesses übergegangen, wenn an zwei zeitlich voneinander beabstandeten Stellen des Verlaufs des Prozessparameters die zuvor festgelegten Referenzsteigungen erreicht sind. Hierdurch kann besonders zuverlässig ermittelt werden, wann der Verlauf des Prozessparameters einen charakteristischen Punkt erreicht hat, beispielsweise einen Wendepunkt. Werden beispielsweise zwei Werkstücke miteinander verschweißt, so zeigt der Verlauf der Leistung der Sonotrode über der Zeit dann ein Maximum, wenn beide Werkstücke vollständig aufgeschmolzen sind. Zu diesem Zeitpunkt kann bzw. muss der Bearbeitungsprozess in einen weiteren Schritt übergehen. Dies kann beispielsweise ein Abschalten der Sonotrode, ein Abheben der Sonotrode von dem Werkstück, ein Reduzieren der Anstellkraft, mit der die Sonotrode an das Werkstück angestellt wird, oder ein Reduzieren der Leistung der Sonotrode sein.

Selbstverständlich kann das erfindungsgemäße Verfahren auch mit herkömmlichen Abschaltkriterien verknüpft werden, beispielsweise dem Erreichen von Absolutwerten des Wegs, der Zeit, der Kraft, der Energie, der Amplitude, oder dergleichen, der verwendeten Sonotrode bzw. des verwendeten Bearbeitungswerkzeugs. Auch kann es vorteilhaft sein, wenn für die Referenzsteigungen vorbestimmte zulässige Abweichungen vorgegeben werden, beispielsweise Abweichungen von +/-5 % oder dergleichen.

Nach einer vorteilhaften Ausführungsform können die vorgegebenen Vergleichskriterien aus einer Gruppe ausgewählt sein, die umfasst: ≥, ≤, =, >, <. Auf diese Weise lässt sich das Verfahren individuell an einen jeweiligen Verlauf des Prozessparameters anpassen, da individuell eingestellt werden kann, auf welche Weise die erste Steigung und die zweite Steigung mit der jeweiligen Referenzsteigung korrelieren soll. So kann beispielsweise vorgegeben werden, dass die ermittelte erste Steigung größer oder gleich sein muss als die erste Referenzsteigung oder es kann beispielsweise vorgegeben werden, dass die zweite ermittelte Steigung gleich der zweiten Referenzsteigung sein muss.

Nach einer weiteren vorteilhaften Ausführungsform kann die zur Ermittlung der ersten und/oder der zweiten Steigung herangezogene Zeitspanne vorgegeben werden, so dass eine noch bessere Anpassung an den Verlauf des Prozessparameters möglich ist. Werden beispielsweise die beiden Zeitspannen unterschiedlich groß gewählt, so können abrupte Änderungen des Verlaufs gut erkannt und zur Steuerung herangezogen werden.

Weiterhin kann es vorteilhaft sein, wenn in den nachfolgenden Schritt des Bearbeitungsprozesses mit einer vorgegebenen Zeitverzögerung übergegangen wird.

Hierdurch kann ebenfalls individuell auf die Anforderungen verschiedener Bearbeitungsprozesse eingegangen werden.

Nach einer weiteren vorteilhaften Ausführungsform kann das Aufzeichnen des Verlaufs des Prozessparameters und das Vergleichen der Steigungen während der Ultraschallbearbeitung in Echtzeit erfolgen, beispielsweise mit einer Abtastrate von 1 bis 10 Millisekunden, insbesondere 1 Millisekunde. Hierdurch lässt sich der Prozessparameter sehr präzise aufzeichnen und auswerten.

Nach einer weiteren vorteilhaften Ausführungsform kann das Festlegen der ersten Referenzsteigung und der zweiten Referenzsteigung dadurch erfolgen, dass zunächst eine Ultraschallbearbeitung eines Werkstücks durchgeführt wird, hierbei der Verlauf des Prozessparameters aufgezeichnet wird, und auf Basis der Charakteristika des aufgezeichneten Verlaufs die erste Referenzsteigung und die zweite Referenzsteigung bestimmt werden. Da erfindungsgemäß der Verlauf der Prozessparameter bei verschiedenen Bearbeitungsprozessen und bei verschiedenen Werkstücken oder Werkstückpaarungen stets unterschiedlich ist, kann durch den vorstehend beschriebenen Schritt zunächst festgestellt werden, wie sich der Verlauf des Prozessparameters grundsätzlich darstellt. Hierdurch können beispielsweise Maxima oder Wendepunkte des Verlaufs ermittelt werden, woraufhin dann die beiden Referenzsteigungen geeignet festgelegt werden können, um ein wunschgemäßes Abschalten bzw. Weiterschalten des Bearbeitungsprozesses auszulösen.

Nach einem weiteren Aspekt der vorliegenden Erfindung betrifft diese eine Prozesssteuervorrichtung zur Steuerung eines Ultraschallbearbeitungsprozesses der vorstehend beschriebenen Art, wobei die Prozesssteuervorrichtung zur Durchführung eines Verfahrens der vorbeschriebenen Art eingerichtet und ausgebildet ist. Eine solche Prozesssteuervorrichtung kann beispielsweise eine Recheneinheit und eine Ein- und Ausgabeeinheit aufweisen, wobei auf der Ausgabeeinheit insbesondere der Verlauf des Prozessparameters in Echtzeit darstellbar ist und sowohl die beiden Referenzsteigungen wie auch die erste und die zweite ermittelte Steigung während der Bearbeitung in Echtzeit darstellbar sind.

Nachfolgend wird die vorliegende Erfindung rein beispielhaft anhand einer vorteilhaften Ausführungsform beschrieben. Es zeigen:
- Fig. 1: eine schematische Darstellung des Verlaufs eines Prozessparameters;
- Fig. 2: eine schematische Darstellung einer Eingabeeinrichtung für eine Prozesssteuervorrichtung; und
- Fig. 3: die Darstellung eines Verlaufs eines Prozessparameters an einer Ausgabeeinrichtung der Prozesssteuervorrichtung.

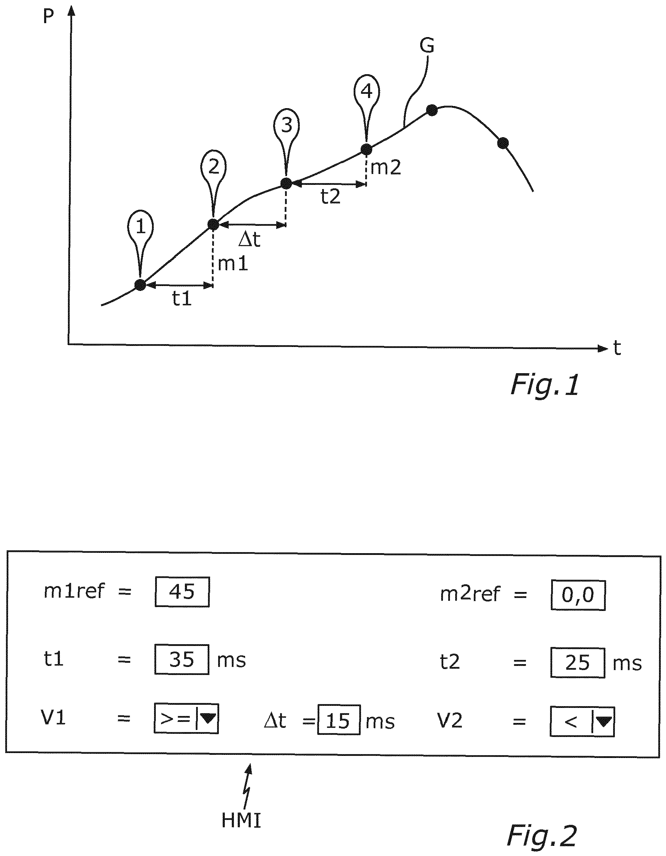

Wie eingangs bereits beschrieben wurde, wird erfindungsgemäß zur Steuerung eines Bearbeitungsprozesses mit einer Sonotrode der Verlauf eines Prozessparameters während der Ultraschallbearbeitung ermittelt bzw. aufgezeichnet und insbesondere auch dargestellt. Fig. 1 zeigt als Beispiel für einen solchen Verlauf die während der Bearbeitung von der Sonotrode abgegebene Ultraschallleistung über der Zeit. Der erkennbare Graph entspricht dem Verlauf G und die während der Bearbeitung ermittelte Steigung m1 ergibt sich aus der Differenz der Prozesswerte an den Stellen 2 und 1 und die kontinuierlich ermittelte Steigung m2 ergibt sich aus der Differenz der Prozesswerte an den Stellen 4 und 3. Die beiden Zeitpunkte, zu denen die Steigungen des Graphen bzw. des Verlaufs G ermittelt werden, sind zeitlich voneinander beabstandet und zwar um einen vorbestimmten zeitlichen Versatz Δt.

Wie vorstehend beschrieben, werden für das erfindungsgemäße Verfahren zunächst Referenzsteigungen festgelegt, nämlich eine erste Referenzsteigung m1ref und eine zweite Referenzsteigung m2ref. Weiterhin kann die jeweilige Zeitspanne t1 und t2 vorgegeben werden, die zur Ermittlung der ersten und der zweiten Steigung herangezogen wird. Bei dem in Fig. 2 dargestellten Ausführungsbeispiel ist ein Teil einer Ein- und Ausgabeeinrichtung HMI dargestellt, mit der verschiedene Werte und Kriterien vorgegeben werden können. Für die Referenzsteigung m1ref ist bei dem dargestellten Beispiel 45 gewählt und die Referenzsteigung m2ref ist mit 0 festgelegt. Die Zeitdauer t1 zur Ermittlung der ersten Steigung m1 ist mit 35 Millisekunden gewählt, während die Zeitdauer t2 zur Ermittlung der zweiten Steigung mit 25 Millisekunden gewählt ist. Der zeitliche Versatz Δt ist zu 15 ms gewählt.

Schließlich können durch die Ein- und Ausgabeeinrichtung HMI auch die Vergleichskriterien festgelegt werden, die bei dem Vergleich der ersten Steigung und der zweiten Steigung mit der jeweiligen Referenzsteigung Anwendung finden sollen. Bei dem dargestellten Ausführungsbeispiel soll die Steigung m1 größer oder gleich der Referenzsteigung m1ref von 45 sein. Die zweite Steigung m2 soll dem Vergleichskriterium V2 genügen und kleiner als die zweite Referenzsteigung m2ref von 0,0 sein.

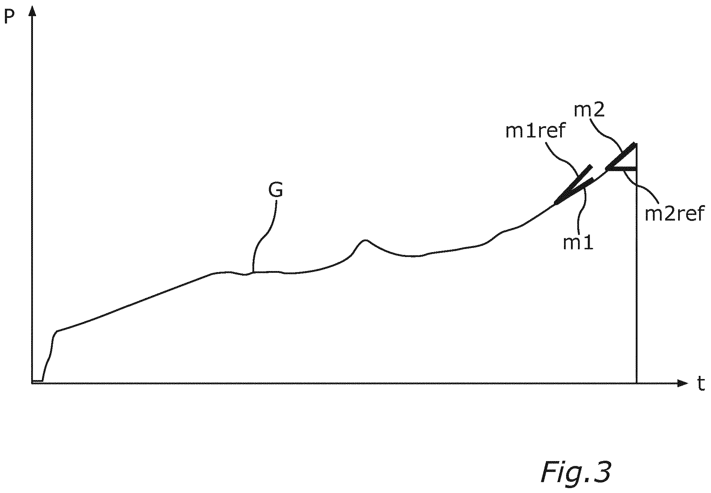

Fig. 3 zeigt eine Darstellung einer Ausgabeeinrichtung einer erfindungsgemäßen Prozesssteuervorrichtung, wobei als Prozessparameter P die Leistung der Sonotrode über der Zeitdauer dargestellt ist. In den Verlauf G wird graphisch (und rechnerisch) sowohl die erste Steigung m1 wie auch die zweite Steigung m2 "hineingelegt", wobei gleichzeitig die zugehörigen Referenzsteigungen m1ref und m2ref dargestellt sind. Zu dem dargestellten Prozesszeitpunkt ist die Steigung m1 kleiner als die Steigung m1ref, so dass das Vergleichskriterium V1 von Fig. 2 nicht erfüllt ist. Das Gleiche gilt für die Steigung m2, die ebenfalls noch größer ist als die vorgegebene Referenzsteigung m2ref von 0,0. Wenn allerdings der Verlauf G im Weiteren noch steiler ansteigt und danach schlagartig abfällt, so erfüllen beide Steigungen m1 und m2 die vorgegebenen Vergleichskriterien, d.h. die Steigung m1 wird größer als die Steigung m1ref und die Steigung m2 wird gleich der Steigung m2ref, so dass in den nachfolgenden Schritt des Bearbeitungsprozesses übergegangen werden kann, beispielsweise kann die Ultraschallbearbeitung beendet werden.

Auch wenn das vorstehend beschriebene Verfahren im Zusammenhang mit einem Bearbeitungsprozess beschrieben wurde, der eine Sonotrode zur Ultraschallbearbeitung verwendet, kann das erfindungsgemäße Verfahren selbstverständlich auch für andere Bearbeitungsprozesse Anwendung finden, bei denen nicht immer eine Ultraschallbearbeitung erfolgt, beispielsweise bei Fügeprozessen, Einpressprozessen, Schneideprozessen oder dergleichen. Die beschriebene Erfindung erstreckt sich also ausdrücklich auch auf Verfahren, bei denen nur zeitweise eine Ultraschallbearbeitung mit Hilfe einer Sonotrode erfolgt.

## Patentansprüche

1. Verfahren zur Steuerung eines Bearbeitungsprozesses, bei dem mit einer gegen ein Werkstück anstellbaren Sonotrode eine Ultraschallbearbeitung erfolgt, umfassend die folgenden Schritte:
- Aufzeichnen des Verlaufs (G) des Prozessparameters (P) während der Ultraschallbearbeitung,
- wiederholtes Ermitteln einer ersten Steigung (m1) und einer zweiten Steigung (m2) des Verlaufs während des Bearbeitungsprozesses, wobei die beiden Steigungen (m1, m2) um einen vorbestimmten zeitlichen Versatz (Δt) zeitlich nacheinander ermittelt werden,
**gekennzeichnet durch**:
- Festlegen einer ersten Referenzsteigung (m1ref) und einer zweiten Referenzsteigung (m2ref) für den Verlauf (G) eines Prozessparameters (P) über der Zeit (t),
- Vergleichen der ersten Steigung (m1) mit der ersten Referenzsteigung (m1ref) und Vergleichen der zweiten Steigung (m2) mit der zweiten Referenzsteigung (m2ref) während des Bearbeitungsprozesses, jeweils unter Anwendung eines vorgegebenen Vergleichskriteriums (V1, V2),
- Übergang in einen nachfolgenden Schritt des Bearbeitungsprozesses, insbesondere Beenden der Ultraschallbearbeitung, wenn bei beiden Vergleichen gleichzeitig das vorgegebene Vergleichskriterium (V1, V2) erfüllt ist.

2. Verfahren nach Anspruch 1,
**dadurch gekennzeichnet,**
**dass** der Prozessparameter (P) aus einer Gruppe ausgewählt ist, die umfasst: Leistung der Sonotrode/Zeit, Amplitude der Sonotrode/Zeit, Anstellkraft der Sonotrode/Zeit, der Sonotrode zugeführte Energie / Zeit, Temperatur der Sonotrode / Zeit.

3. Verfahren nach Anspruch 1 oder 2,
**dadurch gekennzeichnet,**
**dass** die vorgegebenen Vergleichskriterien (V1, V2) aus einer Gruppe ausgewählt sind, die umfasst: >=, <=, =, > und <.

4. Verfahren nach einem der vorstehenden Ansprüche,
**dadurch gekennzeichnet,**
**dass** eine zur Ermittlung der ersten und/oder der zweiten Steigung herangezogene Zeitspanne (t1, t2) vorgegeben wird.

5. Verfahren nach einem der vorstehenden Ansprüche,
**dadurch gekennzeichnet,**
**dass** der Übergang in einen nachfolgenden Schritt des Bearbeitungsprozesses aus einer Gruppe ausgewählt ist, die zumindest einen der folgenden Schritte umfasst: Abschalten der Sonotrode, Abheben der Sonotrode von dem Werkstück, Reduzieren der Anstellkraft, mit der die Sonotrode an das Werkstück angestellt wird, Reduzieren der Leistung der Sonotrode, Verringerung der Vorschubgeschwindigkeit der Sonotrode, Veränderung der Amplitude der Sonotrode.

6. Verfahren nach einem der vorstehenden Ansprüche,
**dadurch gekennzeichnet,**
**dass** in den nachfolgenden Schritt des Bearbeitungsprozesses mit einer vorgegebenen Zeitverzögerung übergegangen wird.

7. Verfahren nach einem der vorstehenden Ansprüche,
**dadurch gekennzeichnet,**
**dass** das Aufzeichnen des Verlaufs des Prozessparameters (P) und das Vergleichen der Steigungen während der Ultraschallbearbeitung in Echtzeit erfolgt, insbesondere mit einer Abtastrate von 1-10 ms.

8. Verfahren nach einem der vorstehenden Ansprüche,
**dadurch gekennzeichnet,**
**dass** das Festlegen der ersten Referenzsteigung (m1ref) und der zweiten Referenzsteigung (m2ref) dadurch erfolgt, dass zunächst eine Ultraschallbearbeitung eines Werkstücks durchgeführt wird, hierbei der Verlauf (G) des Prozessparameters aufgezeichnet wird, und auf Basis der Charakteristika des aufgezeichneten Verlaufs die erste Referenzsteigung (m1ref) und die zweite Referenzsteigung (m2ref) bestimmt werden.

9. Prozesssteuervorrichtung zur Steuerung eines Ultraschallbearbeitungsprozesses unter Verwendung einer Sonotrode, eingerichtet und ausgebildet zur Durchführung des Verfahrens nach einem der vorstehenden Ansprüche.

10. Prozesssteuervorrichtung nach Anspruch 9,
**dadurch gekennzeichnet,**
**dass** diese eine Eingabeeinrichtung (HMI) aufweist, mit der die Referenzsteigungen und die Vergleichskriterien eingegeben werden können.

## Claims

1. Method for controlling a machining process in which ultrasonic machining is carried out using a sonotrode which can be placed against a workpiece, comprising the following steps:
- recording the progression (G) of the process parameter (P) during the ultrasonic machining,
- repeatedly determining a first gradient (m1) and a second gradient (m2) of the progression during the machining process, the two gradients (m1, m2) being determined one after the other with a predetermined time offset (Δt),
**characterised by**
- defining a first reference gradient (mlref) and a second reference gradient (m2ref) for the progression (G) of a process parameter (P) over time (t),
- comparing the first gradient (m1) with the first reference gradient (mlref) and comparing the second gradient (m2) with the second reference gradient (m2ref) during the machining process, in each case using a predetermined comparison criterion (V1, V2),
- transitioning to a subsequent step of the machining process, in particular termination of the ultrasonic machining, if the predetermined comparison criterion (V1, V2) is met for both comparisons simultaneously.

2. Method according to claim 1,
**characterised**
**in that** the process parameter (P) is selected from a group comprising: power of the sonotrode/time, amplitude of the sonotrode/time, contact force of the sonotrode/time, energy supplied to the sonotrode/time, temperature of the sonotrode/time.

3. Method according to either claim 1 or 2,
**characterised**
**in that** the predetermined comparison criteria (V1, V2) are selected from a group comprising: ≥, ≤, =, > and <.

4. Method according to any of the preceding claims,
**characterised**
**in that** a time period (t1, t2) used for determining the first and/or second gradient is predetermined.

5. Method according to any of the preceding claims,
**characterised**
**in that** the transition to a subsequent step of the machining process is selected from a group comprising at least one of the following steps: switching off the sonotrode, lifting the sonotrode from the workpiece, reducing the contact force with which the sonotrode is placed against the workpiece, reducing the power of the sonotrode, reducing the feed rate of the sonotrode, changing the amplitude of the sonotrode.

6. Method according to any of the preceding claims,
**characterised**
**in that** the transition to the subsequent step of the machining process takes place with a predetermined time delay.

7. Method according to any of the preceding claims,
**characterised**
**in that** the recording of the progression of the process parameter (P) and the comparison of the gradients takes place in real time during the ultrasonic processing, in particular with a sampling rate of 1-10 ms.

8. Method according to any of the preceding claims,
**characterised**
**in that** the first reference gradient (mlref) and the second reference gradient (m2ref) are defined by initially carrying out an ultrasonic machining of a workpiece, recording the progression (G) of the process parameter in this context, and determining the first reference gradient (mlref) and the second reference gradient (m2ref) on the basis of the characteristics of the recorded progression.

9. Process control device for controlling an ultrasonic machining process using a sonotrode, set up and configured to carry out the method according to any of the preceding claims.

10. Process control device according to claim 9,
**characterised**
**in that** it has an input device (HMI) by means of which the reference gradients and the comparison criteria can be inputted.

## Revendications

1. Procédé de commande d'un processus de traitement, dans lequel un traitement par ultrasons est réalisé avec une sonotrode pouvant être appliquée contre une pièce, comprenant les étapes suivantes consistant à :
- enregistrer le tracé (G) du paramètre de processus (P) pendant le traitement par ultrasons,
- déterminer de manière répétée une première pente (m1) et une seconde pente (m2) du tracé pendant le processus de traitement, dans lequel les deux pentes (m1, m2) sont déterminées successivement dans le temps avec un décalage temporel prédéterminé (Δt),
**caractérisé par** :
- définir une première pente de référence (m1ref) et une seconde pente de référence (m2ref) pour le tracé (G) d'un paramètre de processus (P) en fonction du temps (t),
- comparer la première pente (m1) avec la première pente de référence (mlref) et comparer la seconde pente (m2) avec la seconde pente de référence (m2ref) pendant le processus de traitement, en utilisant respectivement un critère de comparaison prédéterminé (V1, V2),
- passer à une étape suivante du processus de traitement, en particulier mettre fin au traitement par ultrasons si le critère de comparaison prédéterminé (V1, V2) est simultanément satisfait lors des deux comparaisons.

2. Procédé selon la revendication 1,
**caractérisé en ce**
**que** le paramètre de processus (P) est choisi parmi un groupe comprenant : puissance de la sonotrode/temps, amplitude de la sonotrode/temps, force d'application de la sonotrode/temps, énergie fournie à la sonotrode/temps, température de la sonotrode/temps.

3. Procédé selon la revendication 1 ou 2,
**caractérisé en ce**
**que** les critères de comparaison prédéterminés (V1, V2) sont choisis parmi un groupe comprenant : >=, <=, =, > et <.

4. Procédé selon l'une des revendications précédentes,
**caractérisé en ce**
**qu'**un intervalle de temps (t1, t2) utilisé pour déterminer la première et/ou la seconde pente est prédéfini.

5. Procédé selon l'une des revendications précédentes,
**caractérisé en ce**
**que** le passage à une étape suivante du processus de traitement est choisi parmi un groupe comprenant au moins l'une des étapes suivantes consistant à : arrêter la sonotrode, soulever la sonotrode de la pièce, réduire la force d'application avec laquelle la sonotrode est appliquée sur la pièce, réduire la puissance de la sonotrode, diminuer la vitesse d'avance de la sonotrode, changer l'amplitude de la sonotrode.

6. Procédé selon l'une des revendications précédentes,
**caractérisé en ce**
**que** le passage à l'étape suivante du processus de traitement est effectué avec un temps de retard prédéterminé.

7. Procédé selon l'une des revendications précédentes,
**caractérisé en ce**
**que** l'enregistrement du tracé du paramètre de processus (P) et la comparaison des pentes pendant le traitement par ultrasons s'effectuent en temps réel, en particulier à une fréquence d'échantillonnage de 1 à 10 ms.

8. Procédé selon l'une des revendications précédentes,
**caractérisé en ce**
**que** la première pente de référence (m1ref) et la seconde pente de référence (m2ref) sont définies en réalisant tout d'abord un traitement par ultrasons d'une pièce, en enregistrant le tracé (G) du paramètre de processus, et en déterminant la première pente de référence (m1ref) et la seconde pente de référence (m2ref) sur la base des caractéristiques du tracé enregistré.

9. Dispositif de commande de processus pour la commande d'un processus de traitement par ultrasons en utilisant une sonotrode, conçu et formé pour mettre en œuvre le procédé selon l'une des revendications précédentes.

10. Dispositif de commande de processus selon la revendication 9,
**caractérisé en ce**
**que** celui-ci comporte un dispositif d'entrée (HMI) avec lequel les pentes de référence et les critères de comparaison peuvent être entrés.
